# EUROPEAN PATENT APPLICATION

(11) **EP 3 222 916 A1**
(43) Date of publication of application: **27.09.2017**
(21) Application number: 15860789.5
(22) Date of filing: 08.10.2015
(51) Int. Cl.: F23Q 7/00, H05B 3/48

(54) **METHOD FOR MANUFACTURING CERAMIC HEATER-TYPE GLOW PLUG AND CERAMIC HEATER-TYPE GLOW PLUG**

(30) Priority: 21.11.2014 JP 2014236137
(71) Applicant: Bosch Corporation, Tokyo 150-8360 (JP)
(72) Inventor: TAKATSU Katsumi, Higashimatsuyama-shi Saitama 355-8603 (JP)
(74) Representative: Bee, Joachim
(86) International application number: PCT/JP2015/078602
(87) International publication number: WO 2016/080105

(57) **Abstract**

A filler material is stably supplied to a laser-welded portion, and generation of a crack is suppressed.

A method for manufacturing a ceramic heater-type glow plug (1) that includes: a ceramic heater (11); and a metallic outer cylinder (12) that holds the ceramic heater at one end and has the other end inserted in and fixed to a metallic housing (14), the housing having a first housing section (14a) and a second housing section (14b) coaxially arranged with each other, the method for manufacturing a ceramic heater-type glow plug includes the steps of: inserting the ceramic heater in the outer cylinder; inserting the outer cylinder in the first housing section, the second housing section, and a ring-shaped filler material (18) in a state where the filler material is interposed between the first housing section and the second housing section; and joining the first housing section, the second housing section, and the outer cylinder by welding at a position where the filler material is provided.

## Description

### Technical Field

The invention relates to a method for manufacturing a ceramic heater-type glow plug that is used to aid starting a diesel engine and to a ceramic heater-type glow plug.

### Background Art

A ceramic heater-type glow plug that is used to aid starting a diesel engine has been known. The ceramic heater-type glow plug includes: a ceramic heater with a heat generating section; and an outer cylinder that is made of stainless steel (for example, SUS430) and holds one end side of the ceramic heater in a state where the heat generating section is projected to outside. In such a glow plug, one end side of the outer cylinder is inserted in and fixed to a housing that is made of high carbon steel (for example, S45C) as an attachment fitting to a cylinder head of an engine. The outer cylinder is fixed to the housing by abutting the one end of the outer cylinder against a tip portion of the housing and welding an abutted portion by laser (for example, see PTL 1).

### Citation List

### Patent Literature

[PTL 1] JP-A-2008-8607

### Summary of Invention

### Technical Problem

By the way, in the laser welding of high carbon steel and stainless steel, a welded portion and a periphery thereof are rapidly solidified. As a result, martensitic steel with high hardness is generated, which facilitates generation of a crack. In order to suppress the generation of the crack, a welding method for supplying a filler material between the outer cylinder and the housing during the laser welding so as to dilute carbon concentration in the welded portion has been used.

However, a diameter of the housing is relatively small, and the housing and the outer cylinder are welded by laser while rotating at a high speed. Thus, it has been difficult to stably supply the filler material to the laser-welded portion.

The invention has been made in view of the above problem and therefore has a purpose of providing a method for manufacturing a ceramic heater-type glow plug that can stably supply a filler material to a laser-welded portion and can thereby suppress generation of a crack, and the ceramic heater-type glow plug.

### Solution to Problem

In order to solve the above problem, the invention is a method for manufacturing a ceramic heater-type glow plug that includes: a ceramic heater; and a metallic outer cylinder that holds the ceramic heater at one end and has the other end inserted in and fixed to a metallic housing. The housing has a first housing section and a second housing section coaxially arranged with each other. The method for manufacturing a ceramic heater-type glow plug is characterized by including the steps of: inserting the ceramic heater in the outer cylinder; inserting the outer cylinder in the first housing section, the second housing section, and a ring-shaped filler material in a state where the filler material is interposed between the first housing section and the second housing section; and joining the first housing section, the second housing section, and the outer cylinder by welding at a position where the filler material is provided.

The filler material is preferably formed of any one of nickel, a nickel alloy, and a manganese alloy.

The filler material is preferably formed of nickel, and surfaces of the first housing section and the second housing section are preferably nickel-plated.

The first housing section and the second housing section are preferably formed of carbon steel, and the outer cylinder is preferably formed of stainless steel.

When the ceramic heater is inserted in the outer cylinder, a metalized layer is preferably formed in at least a portion of a surface region of the ceramic heater that is held by the outer cylinder. At least the metalized layer of the ceramic heater is preferably press-inserted in the outer cylinder. After press-insertion, the outer cylinder and the metalized layer are preferably joined by heating.

Lead wire that electrifies the ceramic heater and the ceramic heater are preferably brazed at the same time as joining of the outer cylinder and the metalized layer.

After the lead wire and the ceramic heater are brazed, the outer cylinder is preferably caulked to fix the lead wire to the outer cylinder.

A heat resistant resin is preferably provided on a surface of the lead wire that opposes a caulked portion of the outer cylinder.

The surface of the lead wire that opposes the caulked portion of the outer cylinder is preferably knurled.

An oxidation resistant layer made by a material with an oxidation resistance property is preferably formed in a connection portion of the lead wire, which electrifies the ceramic heater, to the ceramic heater.

The material with the oxidation resistance property is preferably silver or nickel.

The invention is a ceramic heater-type glow plug that includes: a ceramic heater; and a metallic outer cylinder that holds the ceramic heater at one end and has the other end inserted in and fixed to a metallic housing. The housing has a first housing section and a second housing section coaxially arranged with each other. The ceramic heater-type glow plug is characterized in that a ring-shaped filler material, through which the outer cylinder is inserted, is provided between the first housing section and the second housing section and that the first housing section, the second housing section, and the outer cylinder are joined by welding at a position where the filler material is provided.

The filler material is preferably formed of any one of nickel, a nickel alloy, and a manganese alloy.

The filler material is preferably formed of nickel, and surfaces of the first housing section and the second housing section are preferably nickel-plated.

The first housing section and the second housing section are preferably formed of carbon steel, and the outer cylinder is preferably formed of stainless steel.

A metalized layer is preferably formed in at least a portion of a surface region of the ceramic heater that is held by the outer cylinder, and the metalized layer is preferably press-inserted in the outer cylinder and joined to the outer cylinder by heating.

Lead wire that electrifies the ceramic heater is preferably provided, and the lead wire is preferably fixed to the outer cylinder by caulking of the outer cylinder.

A heat resistant resin is preferably provided on a surface of the lead wire that opposes a caulked portion of the outer cylinder.

The surface of the lead wire that opposes the caulked portion of the outer cylinder is preferably knurled.

An oxidation resistant layer made by a material with an oxidation resistance property is preferably provided in a connection portion between the lead wire and the ceramic heater.

The material with the oxidation resistance property is preferably silver or nickel.

### Advantageous Effects of Invention

According to the invention, the filler material can stably be supplied to a laser-welded portion, and generation of a crack can be suppressed.

### Brief Description of Drawings

[Fig. 1] Fig. 1 is a vertical cross-sectional view of a ceramic heater-type glow plug according to a first embodiment of the invention.
[Fig. 2] Fig. 2 is a vertical cross-sectional view of the ceramic heater-type glow plug in which a portion near a ceramic assembly is enlarged in Fig. 1.
[Fig. 3] Fig. 3 includes views for illustrating a method for manufacturing the ceramic heater-type glow plug according to the first embodiment of the invention.
[Fig. 4] Fig. 4 is a vertical cross-sectional view of a ceramic heater-type glow plug according to a second embodiment of the invention.

### Description of Embodiments

A description will hereinafter be made on a preferred embodiment of the invention with reference to the drawings. Note that the embodiment described below is merely one example and various embodiments can be made within the scope of the invention.

### [First Embodiment]

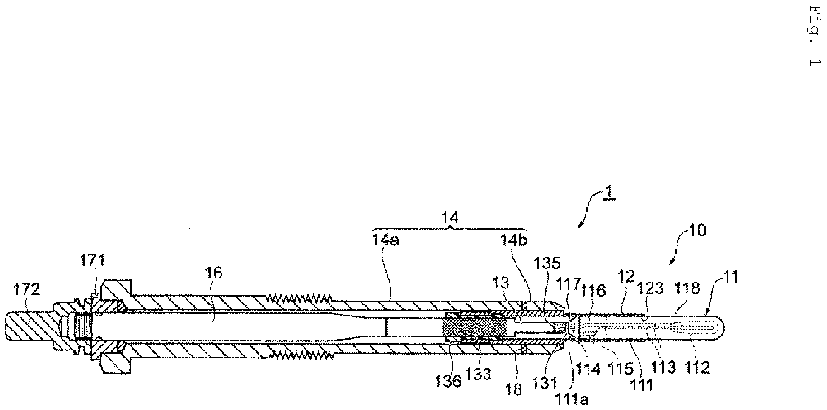

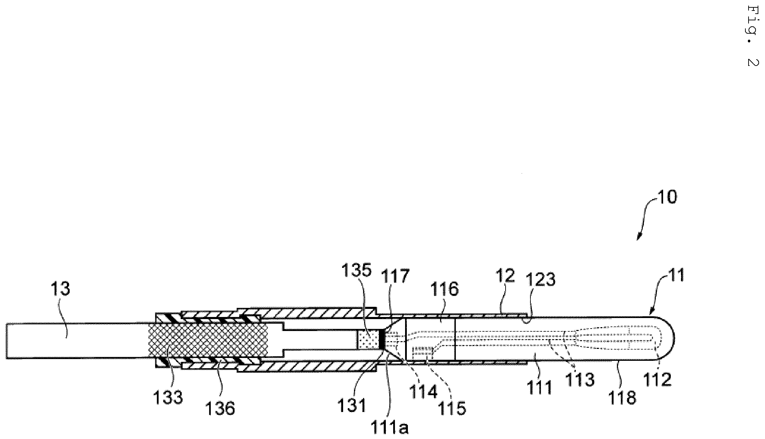

Fig. 1 is a vertical cross-sectional view of a ceramic heater-type glow plug 1 for a diesel engine according to a first embodiment of the invention. Fig. 2 is a vertical cross-sectional view of the ceramic heater-type glow plug in which a portion near a ceramic assembly is enlarged in Fig. 1. As depicted in Fig. 1, Fig. 2, the glow plug 1 includes a ceramic heater assembly 10, a housing 14, a lead rod 16, and the like. Note that a transverse section used below means a cut plane that is perpendicular to a longitudinal axis of the ceramic heater-type glow plug 1. In addition, a vertical cross section used below means a cut plane that includes the longitudinal axis of the ceramic heater-type glow plug 1.

### <Configuration of Ceramic Heater-Type Glow Plug>

### (Ceramic Heater-Type Assembly)

The ceramic heater assembly 10 includes a ceramic heater 11, a metallic outer cylinder (sheath) 12, a large-diameter lead section 13, and the like.

The ceramic heater 11 is a portion that is heated by electrification. In the ceramic heater 11, a ceramic heat generating body 112 that is formed in a U shape is embedded in a ceramic insulation substrate 111 that constitutes a main body section. On both end sides of this ceramic heat generating body 112, a positive electrode 114 and a negative electrode 115 are provided via metal leads 113. The negative electrode 115 is exposed onto an outer circumferential surface of the ceramic insulation substrate 111, and a negative electrode side metalized section 116 as a metalized layer is formed on the outer circumferential surface of the ceramic insulation substrate 111 that includes the negative electrode 115.

The negative electrode side metalized section 116 is, for example, formed of silver paste that contains copper (Cu) of 30% by weight or less and titanium (Ti) of 10% by weight or less of total weight of the negative electrode side metalized section 116.

Of the ceramic heater 11, at least the negative electrode side metalized section 116 is joined to an inner surface on one end side of the outer cylinder 12, and the negative electrode 115 is electrically connected to the outer cylinder 12. That is, the outer cylinder 12 is formed of a metal material with electrical conductivity, for example, stainless steel (SUS430). The outer cylinder 12 has an outer circumferential surface in a stepped cylindrical shape that can be formed by deep drawing. Here, a reason why the outer cylinder 12 is in the shape that can be formed by deep drawing is to reduce manufacturing cost. The outer cylinder 12 is formed such that an inner diameter thereof is in size to allow press-insertion of the ceramic heater 11, and is also formed such that a large clearance is hardly generated between an inner circumferential surface 123 of the outer cylinder 12 and an outer circumferential surface 118 of the ceramic heater 11 when the ceramic heater 11 is press-inserted in the outer cylinder 12.

More specifically, the ceramic heater 11 and the outer cylinder 12 are joined by heating the ceramic heater 11 and the outer cylinder 12 at a temperature at which the material for forming the negative electrode side metalized section 116 is brought into a semi-molten state in a state where the negative electrode side metalized section 116 of the ceramic heater 11 is press-inserted in and fixed to the outer cylinder 12 and by mass transfer between the outer cylinder 12 and a solid layer of the negative electrode side metalized section 116.

The positive electrode 114 is exposed onto an outer surface of the ceramic insulation substrate 111 on a rear end side thereof that is opposite from a tip side where the ceramic heat generating body 112 is embedded. A positive electrode side metalized section 117 is formed in a rear end surface of the ceramic insulation substrate 111 that includes the positive electrode 114. This positive electrode side metalized section 117 is joined to a tip surface 131 of the large-diameter lead section 13 by brazing or the like, and the positive electrode 114 and the large-diameter lead section 13 are thereby electrically connected.

Here, a chamfered section 111a is formed on the rear end surface of the ceramic insulation substrate 111. In this way, a distance between the ceramic insulation substrate 111 and the outer cylinder 12 can be increased around a joined portion between the ceramic insulation substrate 111 and the large-diameter lead section 13. Accordingly, an insulation property can be enhanced between a brazing material and the outer cylinder 12 when brazing, which can reduce a chance of insulation breakdown.

During actuation of the glow plug 1, a large current (for example, 4 to 30 amperes) at a high temperature flows through the large-diameter lead section 13. Accordingly, in the case where a diameter of the large-diameter lead section 13 is excessively small, such as being less than 1 mm, in combination with self-generating heat, the large-diameter lead section 13 is possibly oxidized in a short time. To avoid this problem, the large-diameter lead section 13 is formed as a lead rod (lead wire for electrifying the ceramic heater) with a relatively large diameter, for example, having a transverse sectional area that is 20% or more of a transverse sectional area of the ceramic insulation substrate 111.

On the contrary, in the case where the diameter of the large-diameter lead section 13 is excessively large, a sufficient distance cannot be secured between the large-diameter lead section 13 and the outer cylinder 12, which possibly leads to the insulation breakdown. Thus, the transverse sectional area of the large-diameter lead section 13 is preferably 40% or less of the transverse sectional area of the ceramic insulation substrate 111, for example. In addition, the large-diameter lead section 13 is preferably at least twice as long as the diameter of the large-diameter lead section 13.

The large-diameter lead section 13 is formed of a material with lower rigidity and higher electrical conductivity than the lead rod 16 (the lead wire for electrifying the ceramic heater) that functions as an external connection terminal. As such a material, copper (Cu), aluminum (Al), or alloys of those can be raised, for example. Alternatively, an iron alloy or cast iron with the low rigidity and the high electrical conductivity can also be used.

In order to improve an oxidation resistance property, a tip portion of the large-diameter lead section 13 that includes the tip surface 131 is coated with the silver paste as an oxidation resistant layer 135. Noted that the oxidation resistant layer 135 is not limited to the silver paste but a material with the oxidation resistance property, such as nickel, may be baked thereon. In addition, the large-diameter lead section 13 may be nickel (Ni)-plated or the like in order to improve a heat resistance property.

An entire circumferential surface in an axially central portion of the large-diameter lead section 13 is knurled, and a heat resistant resin 136 is filled in between this knurled section 133 and the outer cylinder 12. Here, as the heat resistant resin 136, a polyphenylene sulfide (PPS) resin, a polyether ether ketone (PEEK) resin, or the like is preferably used.

The heat resistant resin 136 is caulked with the outer cylinder 12, and a diameter of a caulked portion of the outer cylinder 12 is reduced when compared to rest thereof. By caulking the outer cylinder 12, the outer cylinder 12 and the heat resistant resin 136 are pressed against the knurled section 133 of the large-diameter lead section 13, and the large-diameter lead section 13 can thereby be fixed to the outer cylinder 12. That is, the surface of the large-diameter lead section 13 that opposes the caulked portion of the outer cylinder 12 is formed with the knurled section 133 and provided with the heat resistant resin 136.

### (Housing)

The housing 14 is an attachment fitting to a cylinder head of the engine, which is not depicted, and houses the outer cylinder 12 and the large-diameter lead section 13. The housing 14 is formed in a cylindrical shape, for example, and the ceramic heater assembly 10, which is configured as described above, is joined and fixed thereto by laser welding. More specifically, the other end side of the outer cylinder 12 is fixed to inside of the housing 14 by laser welding.

The housing 14 includes a first housing section 14a and a second housing section 14b that are each coaxially arranged with the ceramic heater assembly 10, and these are segmented from each other. Due to a request of high strength, the first housing section 14a and the second housing section 14b are each formed of carbon steel (S45C) with high carbon content, for example.

The second housing section 14b is provided in a tip portion of the first housing section 14a, and the second housing section 14b is arranged at a position closer to the ceramic heater assembly 10. A ring-shaped filler material (filler) 18, through which the outer cylinder 12 is inserted, is provided between the first housing section 14a and the second housing section 14b. Together with the filler material 18, the first housing section 14a and the second housing section 14b are joined to the outer cylinder 12 by laser welding at a position where the filler material 18 is provided.

The filler material 18 is preferably formed of any one of nickel, a nickel alloy, and a manganese alloy. However, when the filler material 18 is formed of nickel, surfaces of the first housing section 14a and the second housing section 14b are nickel-plated, which allows surfaces of the housing 14 and the filler material 18 to uniformly contain nickel. Thus, use of nickel is preferred from an aesthetic viewpoint.

### (Lead Rod)

The lead rod 16 is housed in the housing 14 and joined to a rear end portion of the large-diameter lead section 13 by welding.

The lead rod 16 is held by an insulator 171 on a rear end side of the housing 14, and a rear end portion thereof is exposed to outside of the housing 14 and connected to a round pin 172.

That is, a tip side of the lead rod 16 is held by and fixed to the outer cylinder 12 via the large-diameter lead section 13 by caulking, and a rear end side thereof is held by and fixed to the insulator 171.

### <Method for Manufacturing Ceramic Heater-Type Glow Plug>

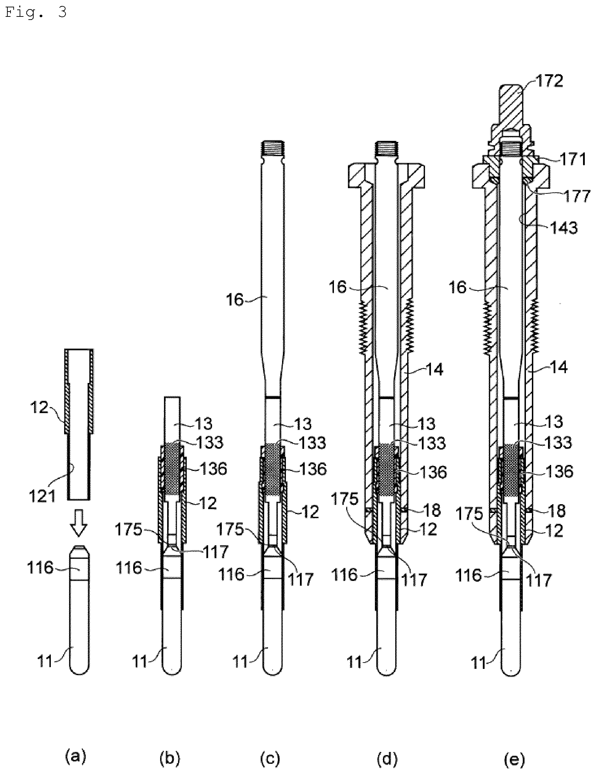

Based on Fig. 3, a method for manufacturing the ceramic heater-type glow plug 1 will be described.

Fig. 3 includes views for illustrating the method for manufacturing the ceramic heater-type glow plug according to the embodiment of the invention.

First, the ceramic heater 11 and the outer cylinder 12 are prepared. Here, the negative electrode side metalized section 116 is formed on the outer circumferential surface near one end (a rear end side after assembly) of the ceramic heater 11.

Next, as depicted in Fig. 3(a), the ceramic heater 11 is press-inserted in an inner hole 121 of the outer cylinder 12. During press-insertion, as depicted in Fig. 3(b), the ceramic heater 11 is press-inserted in the outer cylinder 12 to a position where at least an entire region of the negative electrode side metalized section 116, which is formed in the ceramic heater 11, is housed in the outer cylinder 12.

Next, as depicted in Fig. 3(b), the tip surface 131 of the knurled large-diameter lead section 13 is placed on the positive electrode side metalized section 117 of the ceramic heater 11. At the time, a brazing material 175 is placed between the positive electrode side metalized section 117 and the large-diameter lead section 13. In addition, the heat resistant resin 136 is filled in between the knurled section 133 of the large-diameter lead section 13 and the inner circumferential surface of the outer cylinder 12.

Thereafter, in a state where the outer cylinder 12, the ceramic heater 11, and the large-diameter lead section 13 are temporarily assembled, this assembly is heated to 800 to 900 °C under a vacuum environment or an environment with inert gas. Here, the temperature of 800 to 900 °C is a temperature at which the silver paste, which forms the negative electrode side metalized section 116, is brought into the semi-molten state. Accordingly, the negative electrode side metalized section 116 is brought into the semi-molten state by heating, which causes joining by the mass transfer between the inner circumferential surface of the outer cylinder 12 and the solid layer of the negative electrode side metalized section 116. In this way, the outer cylinder 12 and the ceramic heater 11 are joined. At the same time as this joining, the ceramic heater 11 and the large-diameter lead section 13 are brazed by the brazing material 175.

Next, as depicted in Fig. 3(c), the outer cylinder 12 is caulked so as to fix the large-diameter lead section 13 to the outer cylinder 12. In addition, the lead rod 16 and the large-diameter lead section 13 are joined and fixed by welding (for example, spot welding).

Noted that a method for fixing the large-diameter lead section 13 to the outer cylinder 12 and connecting the large-diameter lead section 13 and the ceramic heater 11 by caulking the outer cylinder 12 in a state where an end portion of the large-diameter lead section 13 is pressed against an end portion of the ceramic heater 11 using a specified magnitude of a force may be used.

Next, as depicted in Fig. 3(d), in a state where the ring-shaped filler material 18 is interposed between the first housing section 14a and the second housing section 14b, the lead rod 16 and the outer cylinder 12 are sequentially inserted from the second housing section 14b side. Then, the outer cylinder 12 is inserted in the first housing section 14a, the second housing section 14b, and the filler material 18.

Thereafter, the first housing section 14a, the second housing section 14b, and the outer cylinder 12 are joined by laser welding at the position where the filler material 18 is provided. In this way, the first housing section 14a, the second housing section 14b, the outer cylinder 12, and the filler material 18 are integrally joined, and the outer cylinder 12 can thereby be fixed to the housing 14.

Finally, as depicted in Fig. 3(e), a rear end of an inner hole 143 of the housing 14 is sealed by the insulator 171, and the round pin 172 is connected to the rear end portion of the lead rod 16. At this time, an O-ring 177 is provided between the insulator 171 and the housing 14.

By the processes described so far, the ceramic heater-type glow plug 1 is completed.

### <Effects>

According to the above-described configuration, the housing 14 is segmented into the first housing section 14a and the second housing section 14b, which are coaxially arranged with each other. In the state where the ring-shaped filler material 18 is interposed between the first housing section 14a and the second housing section 14b, the outer cylinder 12 is inserted in the first housing section 14a, the second housing section 14b, and the filler material 18. Thereafter, the first housing section 14a, the second housing section 14b, and the outer cylinder 12 are joined by laser welding at the position where the filler material 18 is provided. In this way, the first housing section 14a, the second housing section 14b, the outer cylinder 12, and the filler material 18 can integrally be joined and fixed.

Here, the filler material 18 is interposed in a welded portion between the housing 14 and the outer cylinder 12. Accordingly, carbon concentration in the welded portion is diluted. Thus, even in the case where the welded portion is placed under an environment of rapid heating and cooling in a short time by laser welding, generation of a crack therein can be suppressed. In addition, the housing 14 and the outer cylinder 12 rotate during laser welding. Because the filler material 18 is arranged in the ring shape on an outer circumference of the outer cylinder 12, the filler material 18 always exists in the laser-welded portion. Thus, the filler material 18 can stably be supplied to the laser-welded portion.

The filler material 18 is formed of any one of nickel, the nickel alloy, and the manganese alloy. Thus, the filler material 18 with excellent corrosion resistance can be provided.

In addition, when the filler material 18 is formed of nickel, the surfaces of the first housing section 14a and the second housing section 14b are nickel-plated, which allows the surfaces of the housing 14 and the filler material 18 to uniformly contain nickel. Thus, an aesthetic design can be improved.

Even in the case where the housing 14 is formed of carbon steel and the outer cylinder 12 is formed of stainless steel, the generation of the crack after welding can be suppressed due to interposition of the filler material 18.

The outer cylinder 12 can be fixed to the large-diameter lead section 13 by caulking of the outer cylinder 12. Thus, there is no need to fix the large-diameter lead section 13 by filling a filler in between the large-diameter lead section 13 and the outer cylinder 12, or the like. In addition, because the large-diameter lead section 13 can be fixed to the outer cylinder 12 by a single task of caulking, this process can easily be performed in a short time.

The positive electrode side metalized section 117 of the ceramic heater 11 is connected to the lead rod 16 by using the large-diameter lead section 13. Thus, resistance of the large-diameter lead section 13 can be reduced, and a configuration thereof can be simplified. In addition, even when the large current at the high temperature flows therethrough, the self-generating heat can be suppressed. Thus, it is possible to prevent a temperature of the large-diameter lead section 13 from reaching an upper temperature limit thereof or higher. Therefore, deterioration of the large-diameter lead section 13 due to oxidation can be prevented for a long period. Furthermore, by using the large-diameter lead section 13, modes of the other components can also be simplified, and thus a manufacturing process can also be simplified.

Because the large-diameter lead section 13 has the lower rigidity than the lead rod 16, the large-diameter lead section 13 is likely to be deflected. In this way, stress concentration on a joined portion between the large-diameter lead section 13 and the positive electrode side metalized section 117 of the ceramic heater 11 can be alleviated. More specifically, even in the case where bending stress is generated in said joined portion due to vibrations during driving of the engine or stress that is applied to a periphery of each of the joined portions during the assembly of the glow plug 1, the large-diameter lead section 13 is deflected, and thus concentration of the bending stress on said joined portion can be avoided.

Because the large-diameter lead section 13 is formed of copper, the copper alloy, aluminum, the aluminum alloy, or cast iron, the large-diameter lead section 13 can have the relatively low rigidity and the relatively high electrical conductivity. By increasing the electrical conductivity, an effect of suppressing the self-generating heat, which is realized by increasing the diameter of the lead wire, can further be enhanced.

In addition, when the diameter of the large-diameter lead section 13 is set as 1.0, axial length of the large-diameter lead section 13 has a value of 2.0 or larger. In this way, the large-diameter lead section 13 can sufficiently be deflected. Accordingly, even in the case where the bending stress is generated in said joined portion due to the vibrations during driving of the engine or the stress that is applied to the periphery of each of the joined portions during the assembly of the glow plug 1, the large-diameter lead section 13 is deflected, and thus the concentration of the bending stress on said joined portion can be avoided.

When the transverse sectional area of the ceramic heater 11 is set as 1.0, the transverse sectional area of the large-diameter lead section 13 has a value within a range from 0.2 to 0.4. In this way, joint strength of the joined portion between the large-diameter lead section 13 and the positive electrode side metalized section 117 can be enhanced. Accordingly, the joint strength capable of enduring the vibrations, the stress, and the like can be obtained, the vibrations generated when the glow plug 1 is fixed to the engine of the vehicle or the like for use, and the stress being applied to the glow plug 1 during manufacturing thereof. Furthermore, an electrical insulation property between the large-diameter lead section 13 and the outer cylinder 12 can be secured.

The large-diameter lead section 13 is nickel (Ni) -plated or the like, and thus the heat resistance property of the large-diameter lead section 13 can further be enhanced. In addition, by further increasing thermal conductivity of the large-diameter lead section 13, the heat that is transferred from the ceramic heater 11 can efficiently be transferred to the lead rod 16, and the thermal resistance of the large-diameter lead section 13 can further be increased.

Furthermore, durability (particularly, the oxidation resistance property) of the large-diameter lead section 13 can be improved by coating the large-diameter lead section 13 with silver (Ag).

Moreover, the large-diameter lead section 13 is provided with the silver paste as the oxidation resistant layer 135. In this way, the tip of the large-diameter lead section 13 becomes flexible, and a contact area thereof with the positive electrode side metalized section 117 is increased. As a result, contact resistance can be reduced.

### [Second Embodiment]

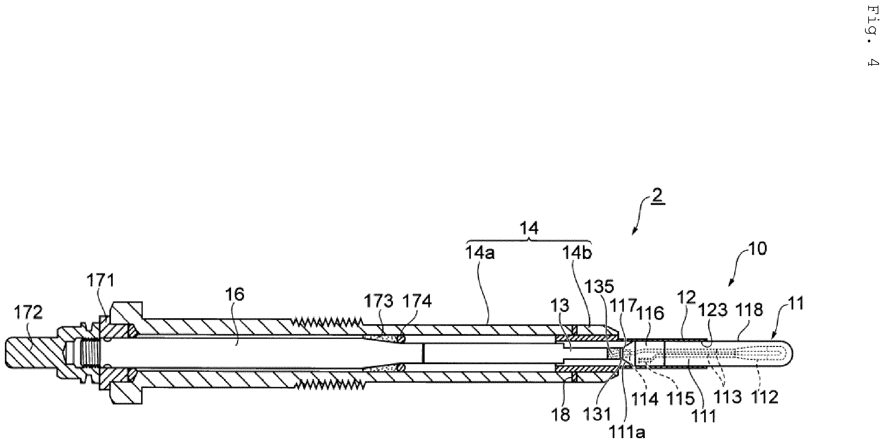

Fig. 4 is a vertical cross-sectional view of a ceramic heater-type glow plug 2 according to a second embodiment of the invention. Noted that, in Fig. 4, the same configuration as that of the first embodiment is denoted by the same reference numerals and the description thereon will not be made.

In a second embodiment, the large-diameter lead section 13 is configured to be fixed to the inside of the housing 14 as depicted in Fig. 4.

In the ceramic heater-type glow plug 2, instead of fixing the large-diameter lead section 13 to the outer cylinder 12, the lead rod 16 is fixed to an inner surface of the first housing section 14a. In this way, the large-diameter lead section 13, which is joined to the lead rod 16, is also fixed to inside of the first housing 14a.

More specifically, the lead rod 16 is housed in the first housing section 14a and fixed by a filler 173 and a seal ring 174, the filler 173 being made of a resin, low melting point glass, or the like that is filled in between the lead rod 16 and the first housing section 14a.

In such a configuration, while the filler 173 and the seal ring 174 have to be provided, there is no need to caulk the outer cylinder 12. Thus, the heat resistant resin 136 does not have to be filled in between the outer cylinder 12 and the large-diameter lead section 13. In addition, the knurled section 133 does not have to be formed in the large-diameter lead section 13.

The glow plug that has been described so far merely illustrates one aspect of the invention, and thus does not limit the invention. Each of the embodiments can arbitrarily be changed within the scope of the invention.

## Claims

1. A method for manufacturing a ceramic heater-type glow plug that includes: a ceramic heater; and a metallic outer cylinder that holds the ceramic heater at one end and has the other end inserted in and fixed to a metallic housing, the housing having a first housing section and a second housing section coaxially arranged with each other, the method for manufacturing a ceramic heater-type glow plug **characterized by** comprising:
inserting the ceramic heater in the outer cylinder;
inserting the outer cylinder in the first housing section, the second housing section, and a ring-shaped filler material in a state where the filler material is interposed between the first housing section and the second housing section; and
joining the first housing section, the second housing section, and the outer cylinder by welding at a position where the filler material is provided.

2. The method for manufacturing a ceramic heater-type glow plug according to claim 1 **characterized in that**
the filler material is formed of any one of nickel, a nickel alloy, and a manganese alloy.

3. The method for manufacturing a ceramic heater-type glow plug according to claim 2 **characterized in that**
the filler material is formed of nickel, and
surfaces of the first housing section and the second housing section are nickel-plated.

4. The method for manufacturing a ceramic heater-type glow plug according to any one of claims 1 to 3 **characterized in that**
the first housing section and the second housing section are formed of carbon steel, and
the outer cylinder is formed of stainless steel.

5. The method for manufacturing a ceramic heater-type glow plug according to any one of claims 1 to 4 **characterized in that**,
when the ceramic heater is inserted in the outer cylinder,
a metalized layer is formed in at least a portion of a surface region of the ceramic heater that is held by the outer cylinder,
at least the metalized layer of the ceramic heater is press-inserted in the outer cylinder, and
after press-insertion, the outer cylinder and the metalized layer are joined by heating.

6. The method for manufacturing a ceramic heater-type glow plug according to claim 5 **characterized in that**
lead wire that electrifies the ceramic heater and the ceramic heater are brazed at the same time as joining of the outer cylinder and the metalized layer.

7. The method for manufacturing a ceramic heater-type glow plug according to claim 6 **characterized in that**
after the lead wire and the ceramic heater are brazed, the outer cylinder is caulked so as to fix the lead wire to the outer cylinder.

8. The method for manufacturing a ceramic heater-type glow plug according to claim 7 **characterized in that**
a heat resistant resin is provided on a surface of the lead wire that opposes a caulked portion of the outer cylinder.

9. The method for manufacturing a ceramic heater-type glow plug according to claim 7 or 8 **characterized in that**
the surface of the lead wire that opposes the caulked portion of the outer cylinder is knurled.

10. The method for manufacturing a ceramic heater-type glow plug according to any one of claims 6 to 9 **characterized in that**
an oxidation resistant layer made by a material with an oxidation resistance property is formed in a connection portion of the lead wire, which electrifies the ceramic heater, to the ceramic heater.

11. The method for manufacturing a ceramic heater-type glow plug according to claim 10 **characterized in that**
the material with the oxidation resistance property is silver or nickel.

12. A ceramic heater-type glow plug that includes: a ceramic heater; and a metallic outer cylinder that holds the ceramic heater at one end and has the other end inserted in and fixed to a metallic housing, the housing having a first housing section and a second housing section coaxially arranged with each other, the ceramic heater-type glow plug **characterized in that**
a ring-shaped filler material, through which the outer cylinder is inserted, is provided between the first housing section and the second housing section, and
the first housing section, the second housing section, and the outer cylinder are joined by welding at a position where the filler material is provided.

13. The ceramic heater-type glow plug according to claim 12 **characterized in that**
the filler material is formed of any one of nickel, a nickel alloy, and a manganese alloy.

14. The ceramic heater-type glow plug according to claim 13 **characterized in that**
the filler material is formed of nickel, and surfaces of the first housing section and the second housing section are nickel-plated.

15. The ceramic heater-type glow plug according to any one of claims 12 to 14 **characterized in that**
the first housing section and the second housing section are formed of carbon steel, and
the outer cylinder is formed of stainless steel.

16. The ceramic heater-type glow plug according to any one of claims 12 to 15 **characterized in that**
a metalized layer is formed in at least a portion of a surface region of the ceramic heater that is held by the outer cylinder, and
the metalized layer is press-inserted in the outer cylinder and is joined to the outer cylinder by heating.

17. The ceramic heater-type glow plug according to any one of claims 12 to 16 **characterized by** comprising:
lead wire that electrifies the ceramic heater, in which the lead wire is fixed to the outer cylinder by caulking of the outer cylinder.

18. The ceramic heater-type glow plug according to claim 17 **characterized in that**
a heat resistant resin is provided on a surface of the lead wire that opposes a caulked portion of the outer cylinder.

19. The ceramic heater-type glow plug according to claim 17 or 18 **characterized in that**
the surface of the lead wire that opposes the caulked portion of the outer cylinder is knurled.

20. The ceramic heater-type glow plug according to any one of claims 17 to 19 **characterized in that**
an oxidation resistant layer made by a material with an oxidation resistance property is provided in a connection portion between the lead wire and the ceramic heater.

21. The ceramic heater-type glow plug according to claim 20 **characterized in that**
the material with the oxidation resistance property is silver or nickel.
